## Europäisches Patentamt

## European Patent Office

(19)

## Office européen des brevets

(11) Veröffentlichungsnummer: **0 126 465**
**B1**

(12) **EUROPÄISCHE PATENTSCHRIFT**

(45) Veröffentlichungstag der Patentschrift:
08.03.89

(21) Anmeldenummer: 84105709.4

(22) Anmeldetag: 18.05.84

(51) Int. Cl.⁴: **F 02 B 37/00,** F 02 B 33/06,
F 02 B 39/04

(54) Verfahren zum Einbringen der Ladeluft in den Zylinder eines Verbrennungsmotors und Motor zur Durchführung des Verfahrens.

(30) Priorität: 18.05.83 DE 3318093
18.05.83 DE 3318094
18.05.83 DE 3318161

(43) Veröffentlichungstag der Anmeldung:
28.11.84 Patentblatt 84/48

(45) Bekanntmachung des Hinweises auf die Patenterteilung:
08.03.89 Patentblatt 89/10

(84) Benannte Vertragsstaaten:
DE FR GB IT SE

(56) Entgegenhaltungen:
FR-A-437 926
GB-A-396 463
GB-A-815 494
GB-A-1 024 846
US-A-2 391 163
US-A-4 211 082

(73) Patentinhaber: Schatz, Oskar, Dr.- Ing.,
Waldpromenade 16, D-8035 Gauting (DE)

(72) Erfinder: Schatz, Oskar, Dr.- Ing., Waldpromenade
16, D-8035 Gauting (DE)

(74) Vertreter: Lamprecht, Helmut, Dipl.- Ing.,
Corneliusstrasse 42, D-8000 München 5 (DE)

## Beschreibung

Die Erfindung betrifft ein Verfahren zum Einbringen der Ladeluft in die Zylinder eines Viertakt-Mehrzylinder-Verbrennungsmotors, bei dem ein Teil der Ladeluft durch die Bewegung des Motorkolbens angesaugt wird und anschließend verdichtete Luft aus einem Verdrängerlader zugeführt wird, wobei die Ausschubbewegung des Kolbens bzw. der Holben des Verdrängerladers mit der Kolbenbewegung der zu versorgenden Motorzylinder synchronisiert ist und wobei der durch den Motorkolben angesaugte Teil der Luft und der durch den Verdrängerlader in den Motorzylinder beförderte Teil der Luft über eine gemeinsame, das Einlaßventil des Motorzylinders enthaltende Luftleitung dem Motorzylinder zugeführt werden, sowie einen Motor zur Durchführung des Verfahrens.

Bisher gebräuchliche Lader sind entweder Verdrängerlader oder Strömungslader. Die gewünschte Fördermenge wird beim Verdrängerlader als Produkt von Drehzahl und Hubvolumen erhalten. Ein kleines Hubvolumen kann durch eine hohe Drehzahl ausgeglichen werden. Ähnliches gilt für den Strömungslader, wobei beispielsweise die Drehzahl von Abgasturboladern 250 000 min$^{-1}$ betragen kann, bei einer Motordrehzahl von nur 4 000 min$^{-1}$.

Bei der sogenannten Aufladung wird durch Verdichter ein Vorrat an verdichteter Luft erzeugt, der beim Öffnen des Einlaßventils in den Motorzylinder einströmt. Dieses Ladeverfahren hat einen relativ hohen Energiebedarf, weil der Energiebedarf zum Ausschieben der verdichteten Luft in den Speicher ein mehrfaches der zur Verdichtung erforderlichen Energie beträgt.

Man hat deshalb bereits die Theorie der sogenannten Nachladung entwickelt, wobei ein Teil der Luft vom Zylinder angesaugt wird und ein anderer Teil durch einen Verdichter verdichtet und in einen Speicher ausgeschoben wird, von wo er im geeigneten Zeitpunkt gegen Ende des Saughubs in den jeweils ansaugenden Motorzylinder über eine gesonderte Luftleitung nach Öffnung eines Taktventils überströmt und dabei die im Motorzylinder befindliche Luft auf das gewünschte Maß verdichtet. Hierfür ist eine gegenüber dem gewünschten Ladedruck im Zylinder erhöhte Verdichtung der Zusatzluft und eine entsprechende Ausschubarbeit in den Speicher erforderlich, obwohl der so erforderliche Energieaufwand bereits eine Verbesserung gegenüber der sogenannten Aufladung darstellt. Weiter nachteilig ist ein hoher konstruktiver Aufwand für die zusätzliche Luftleitung und Ventilsteuerung. Außerdem ist der Ausschubvorgang mit Verlusten behaftet, die einerseits den Energiebedarf weiter erhöhen und andererseits zur Temperaturerhöhung der Ladeluft beitragen. Dies macht insbesondere bei Ottomotoren die Verwendung von Ladeluftkühlern erforderlich und führt zu hohen Antreibleistungen für die meist mechanisch angetriebenen Ladegeräte. Die Nachladung hat sich deshalb in der Praxis bisher nicht durchgesetzt.

Eine Konstruktion zur Durchführung einer ventilgesteuerten Nachladung ist schematisch in der FR-A-437 926 dargestellt. Dabei wird zur Verdichtung der Ladeluft ein mechanischer Kolben verwendet, wobei außerdem zwischen Lader und Motorzylinder ein umsteuerbares Ventil vorgesehen ist, welches den Lufteinlaß des Motorzylinders entweder mit der Atmosphäre oder mit dem Lader verbindet. Der Laderkolben ist mechanisch mit der Kurbelwelle verbunden. Während des Saughubs des Motorkolbens ist das umsteuerbare Ventil zunächst geschlossen, wodurch die Luft im Lader durch die Bewegung des Laderkolbens komprimiert wird, bis zu einem gewählten Zeitpunkt das Ventil geöffnet wird und die komprimierte Luft in den Motorzylinder überströmen kann.

Dabei ist die Verbindung zwischen Ladeluftkammer und Motorzylinder in Abhängigkeit von der Ventilsteuerung nur geöffnet, wenn die Ladeluft in den Motorzylinder überführt werden soll. Eine Selbststeuerung des Ladevorgangs in Abhängigkeit vom Verbrennungsmotor wird durch das Ventil verhindert.

Der Erfindung liegt die Aufgabe zugrunde, beim eingangs genannten Verfahren die Antriebsleistung der Laders und die Temperaturerhöhung bei der Verdichtung, sowie den konstruktiven Aufwand möglichst gering zu halten.

Die Lösung dieser Aufgabe besteht erfindungsgemäß darin, daß der Verdrängerlader durch die Motorabgase angetrieben und von ihm die Luft direkt in den zu versorgenden Motorzylinder ausgeschoben wird, wenn sich dessen Kolben im Bereich des unteren Totpunkts befindet.

Durch die Anwendung eines abgasgetriebenen Verdrängerladers kann einerseits die Synchronisation der Kolbenbewegung von Motor und Lader beibehalten werden, während andererseits die zeitliche Zuordnung der Bewegung des Laderkolbens in Förderrichtung zur Bewegung des Motorkolbens wählbar ist und somit insbesondere auf den Zeitpunkt konzentriert werden kann, zu welchem sich der Motorkolben im Bereich seines unteren Totpunkts befindet. Erst dadurch wird es möglich, eine Vorverdichtung der Ladeluft im Lader zu vermeiden und die im Lader befindliche Luft durch die Bewegung des Laderkolbens zu dem gewünschten Zeitpunkt direkt in den Motorzylinder auszuschieben. Durch das unmittelbare, von keiner Ventilsteuerung am Lader beeinflußte Überströmen der Ladeluft in den Motorzylinder ergibt sich neben einer Verringerung des konstruktiven Aufwands eine spürbare Senkung der Ladearbeit und eine Verringerung der Temperaturerhöhung bei der Verdichtung. Eine weitere Vereinfachung ergibt sich dadurch, daß zum Antrieb des Laders die natürlichen Abgasimpulse genutzt werden können.

Eine zweckmäßige Ausgestaltung besteht darin, daß der Einlaß für die Ladeluft erst geschlossen wird, wenn der Kolben den unteren Totpunkt durchlaufen hat.

Zur Durchführung des erfindungsgemäßen Verfahrens erstreckt sich die Erfindung auch auf einen Viertakt-Mehrzylinder-Verbrennungsmotor, dessen Kolben jeweils in einem einen Lufteinlaß aufweisenden Zylinder beweglich sind, mit einem förderseitig mit dem Lufteinlaß des Motors verbundenen und mit der Kolbenbewegung des Motors synchronisierten Verdrängerlader, der anschließend an eine vom Motorkolben über diesen Einlaß angesaugte Luftmenge verdichtete Luft zuführt, wobei die Erfindung darin besteht, daß der Verdrängerlader ein abgasgetriebener Verdrängerlader ist, daß das Luftfördervolumen der Ladeluftkammer bzw. Ladeluftkammern der im zu ladenden Motorzylinder zusätzlich zu der vom Motorkolben angesaugten Luftmenge zu deren Verdichtung auf den Ladedruck erforderlichen Luftmenge entspricht und daß die Verbindung zwischen Verdrängerlader und Lufteinlaß derart ausgebildet ist, daß bei geöffneten Einlaß und bei Bewegung des Laders in Förderrichtung die Luft vom Lader direkt in den Motorzylinder ausgeschoben wird und daß der Verdrängerlader derart gesteuert ist, daß seine Förderbewegung stattfindet, während der Motorkolben sich im Bereich seines unteren Totpunkts befindet.

Aus der GB-A-815 494 ist ein abgasgetriebenes Spülgebläse in Kolbenbauart für Zweitakt-Motoren bekannt, welches im unteren Totpunkt des Motorkolbens vom Abgas beaufschlagt Luft in den Motorzylinder einschiebt. Ebenfalls ein Spülgebläse mit abgasgetriebenem Kolben zeigt die US-A-4 211 082. Die Verbindung zwischen der Luftkammer des Laders und dem Motorzylinder weist eine Ventilsteuerung auf, so daß hier ebensowenig wie bei der Konstruktion nach der FR-A-437 926 Ladeluft direkt in den Motorzylinder ausgeschoben werden kann.

Dem erfindungsgemäßen Verfahren oder Motor ähnliche Verfahren bzw. Motoren sind Gegenstand weiterer Anmeldungen mit gleichem Zeitrang. So betrifft die EP-A-0 126 464 ein Vefahren zur Zufuhr von Ladeluft in den Brennraum einer Verbrennungskraftmaschine, bei welchem die aus dem Lader verdrängte Luft direkt in den Motorbrennraum überströmt und bei welchem die vorverdichtete Luft gekühlt und anschließend auf höchstens Umgebungsdruck entspannt wird, wobei der Entspannungsbeginn durch Veränderung der Phasenlage zwischen Motorkolben und Laderkolben festgelegt wird. Die EP-A-0 126 467 betrifft einen Motor mit mechanischem Lader, bei welchem die Phasenlage des Laders zu der des Motors veränderbar ist. Die EP-A-0 126 466 hat einen Abgaslader zum Gegenstand, der zur optimalen Nutzung der Abgasenergie eine auf das Abgas einwirkende Taktsteuerung aufweist. Die EP-A-0 126 463 betrifft ein Verfahren zum Einbringen der Ladeluft in die Zylinder eines Mehrzylinder-Verbrennungsmotors im Wege der Nachladung mit Hilfe eines Abgasladers, der durch die natürlichen Abgasimpulse angetrieben wird und die Luft aus dem Lader direkt in den Verbrennungsraum des Motors ausschiebt. Diese Luft wird bei überhöhtem Druck gekühlt und anschließend auf den endgültigen Ladedruck entspannt.

Eine zweckmäßige Ausgestaltung des erfindungsgemäßen Motors besteht darin, daß der Abgaseinlaß des Verdrängerladers direkt mit dem Auslaßventil des abgasliefernden Motorzylinders verbunden ist. Es kann aber auch dem Abgaseinlaß des Verdrängerladers ein Abgassammler vorgeschaltet und die Abgasseite der Laderkammer bzw. der Laderkammern mit einer Taktsteuerung versehen sein.

Eine weitere vorteilhafte Ausführungsform besteht darin, daß die Phasenlage der Bewegung des Verdrängerladers zum Kurbelwinkel der Motorkurbelwelle einstellbar ist.

Noch eine andere zweckmäßige Ausgestaltung ist es, daß dem Laderkolben eine dem Abgasimpuls entgegengesetzte Rückstellkraft zugeordnet ist, wobei die Rückstellkraft vorteilhafterweise derart bemessen ist, daß sich die Hublänge des Laderkolbens in Abhängigkeit von der Intensität der Abgasimpulse verändert.

Schließlich besteht noch eine zweckmäßige Ausgestaltung darin, daß der Bewegung des Laderkolbens eine Dämpfung zugeordnet ist.

Anhand der nun folgenden Beschreibung der in der Zeichnung dargestellten Ausführungsbeispiels der Erfindung wird diese näher erläutert.

Es zeigt:

Fig. 1 schematisch einen Viertaktmotor, bei welchem zur Durchführung des erfindungsgemäßen Verfahrens zwei Zylinder mit einem Verdrängerlader verbunden sind.

Fig. 2 schematisch einen Motorzylinder mit einem Verdrängerlader in Flachkolben-Bauweise,

Fig. 3 ein Arbeitsdiagramm einer konventionellen Aufladung,

Fig. 4 ein Arbeitsdiagramm der theoretisch bekannten sogenannten Nachladung und

Fig. 5 ein Arbeitsdiagramm des erfindungsgemäßen Verfahrens.

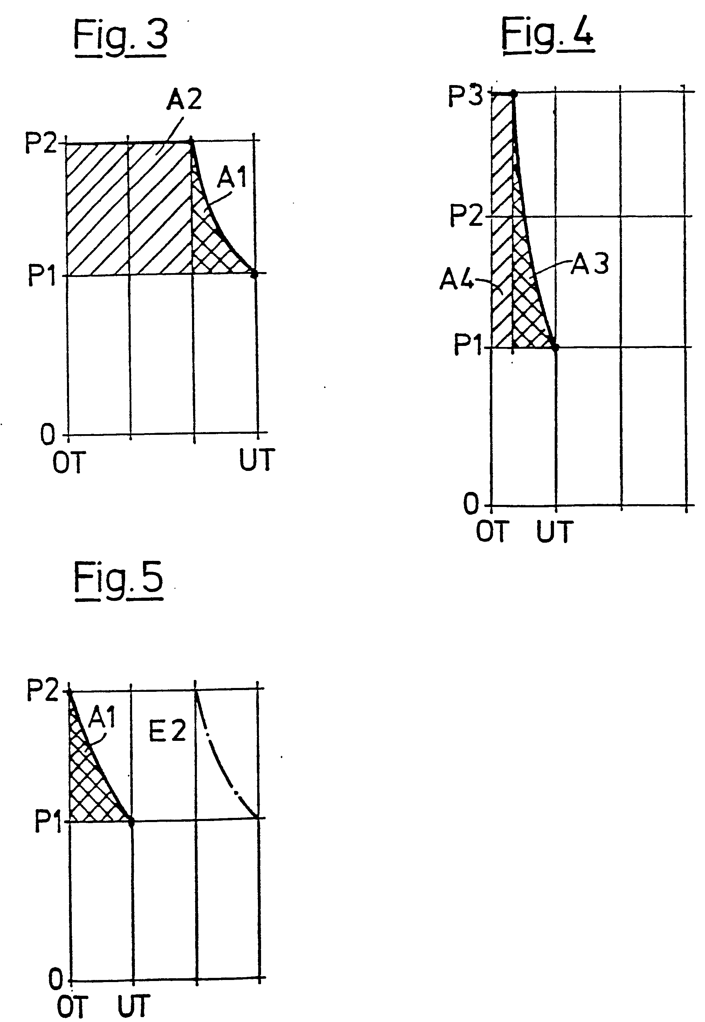

Zum besseren Verständnis wird zunächst die Wirkungsweise der Erfindung im Vergleich mit bekannten Verfahren anhand der Fig. 3 bis 5 erläutert. In diesen Diagrammen ist auf der Abszisse jeweils das Volumen der Laderkammer aufgetragen, wobei bei allen Beispielen der Luftbedarf 1,5 Liter beträgt und ein Volumen des zu ladenden Verbrennungsraums von 1 Liter zugrundegelegt ist, also eine gewünschte Verdichtung von 1,5 : 1. Schadräume im System sind vernachläßigt, wobei der Druck P1 den Atmosphärendruck und der Druck P2 den Ladungsenddruck im Motorzylinder bezeichnet. Auf der Abszisse bezeichnet UT den unteren Totpunkt, d.h. die Stellung des Verdrängerladers, in welcher die Ladeluftkammer innerhalb ihres Arbeitszyklus das größte Volumen aufweist, und OT den oberen Totpunkt, d.h. die Stellung des Verdrängerladers, in welcher die Ladeluftkammer innerhalb ihres Arbeitszyklus das kleinste Volumen aufweist.

Das Diagramm in Fig. 3 zeigt den Bewegungs- und Druckverlauf beim Verdrängerlader bei Durchführung der konventionellen Aufladung. Dabei wird die Ladeluft zunächst vom Atmosphärendruck P1 auf den Ladungsendpunkt P2 verdichtet und dann aus dem Verdrängerlader in einen Zwischenspeicher (Luftverteiler) ausgeschoben, von wo die verdichtete Luft dann in den Motorzylinder abfließt. Bei der Darstellung des Druckverlaufs ist zur Vereinfachung ein unendlich großer Speicher angenommen worden, so daß nach der Verdichtung der Druck P2 konstant bleibt.

In Fig. 3 besteht keine direkte zeitliche Beziehung zwischen dem Verdichtungshub des Laders und dem Ansaughub des Motorkolbens, weil ein bestimmtes Luftvolumen den Ladedruck beliebig lang vor dem Einströmen in den Motorzylinder erreicht. Man erkennt einen relativ kleinen Anteil A1 der aufzubringenden Arbeit, der die Verdichtungsarbeit darstellt, und einen demgegenüber wesentlich größeren Anteil A2, der die Arbeit zum Ausschieben der verdichteten Luft aus dem Lader in den Puffer darstellt, der durch den Zwischenspeicher bzw. das Luftverteilungssystem gebildet wird und üblicherweise ein Fassungsvermögen von mehreren Hubvolumina eines Motorzylinders bzw. einer Laderkammer aufweist. Bei der Aufladung nach Fig. 3 strömt die verdichtete Luft von Beginn des Saughubs an, d.h. nach dem Öffnen des Einlaßventils, in den Motorzylinder, wobei ein Teil der mit A2 bezeichneten Ausschubarbeit an den Motorkolben abgegeben wird.

Die Fig. 4 zeigt den Verfahrensablauf bei der theoretisch vorgeschlagenen Nachladung. Dabei wird nur das Differenzvolumen zwischen dem gewünschten Luftbedarf und der vom zu ladenden Motorzylinder angesaugten Luftmenge vom Verdrängerlader verdichtet. Dieses Differenzvolumen muß aber auf einen hohen Druck P3 verdichtet werden und wird bei diesem hohen Druck in einen Speicher ausgeschoben, wobei die Verdichtungsarbeit mit A3 und die Ausschubarbeit mit A4 bezeichnet ist. Vom Speicher fließt die verdichtete Luft gegen Ende des Saughubs nach Öffnung eines Taktventils zur Nachladung in den Motorzylinder.

Die Fig. 5 zeigt das demgegenüber noch weiter verbesserte erfindungsgemäße Verfahren, bei welchem die Luft direkt aus dem Verdrängerlader in den Motorzylinder überströmt und bei welchem der Energiebedarf noch weiter gesenkt ist. Bei diesem Verfahren saugt der Motorzylinder zunächst unter Atmosphärendruck stehende Luft an, ohne daß dabei zunächst Ladeluft im Verdrängerlader verdichtet und ausgeschoben wird. Erst wenn sich der Kolben im Motorzylinder im Bereich seines unteren Totpunkts befindet, d.h. kurz vor dem Einlaßschluß, wird vom Verdrängerlader das Differenzvolumen direkt in den Motorzylinder geschoben, um die noch unter Atmosphärendruck stehende, angesaugte Luft auf den gewünschten Ladungsenddruck P2 zu bringen. Im Gegensatz zu der theoretisch bereits bekannten, in Fig. 4 dargestellten Nachladung wird in diesem Fall die Verdichtung des für einen bestimmten Motorzylinder gewünschten Differenzvolumens zeitlich genau auf die Kolbenbewegung im Motorzylinder abgestimmt und dabei direkt aus dem Verdrängerlader in den Verbrennungsraum gedrückt, weshalb dieses Ladeverfahren nachfolgend als "direkte Nachladung" bezeichnet wird.

Wie ein Vergleich der Fig. 3 und 5 zeigt, findet während des Verdichtungshubs bei der direkten Nachladung die in Fig. 3 mit A1 bezeichnete Verdichtungsarbeit statt, die den Druck im Motorzylinder auf den Ladungsenddruck bring. Der Anteil der gegenüber der konventionellen Aufladung eingesparten Arbeit ist mit E2 bezeichnet und ist mengenmäßig mit der in Fig. 3 mit A2 bezeichneten Ausschubarbeit identisch. Bei dieser Betriebsweise liegen die Antriebsleistungen für die Ladevorrichtung - wie theoretisch nachweisbar ist - bei etwa 18 % der Antreibsleistung, welche erforderlich ist, wenn die Ladeluft gemäß Fig. 3 zuerst verdichtet und in einen Puffer ausgeschoben wird und erst danach in den Motorzylinder einströmt.

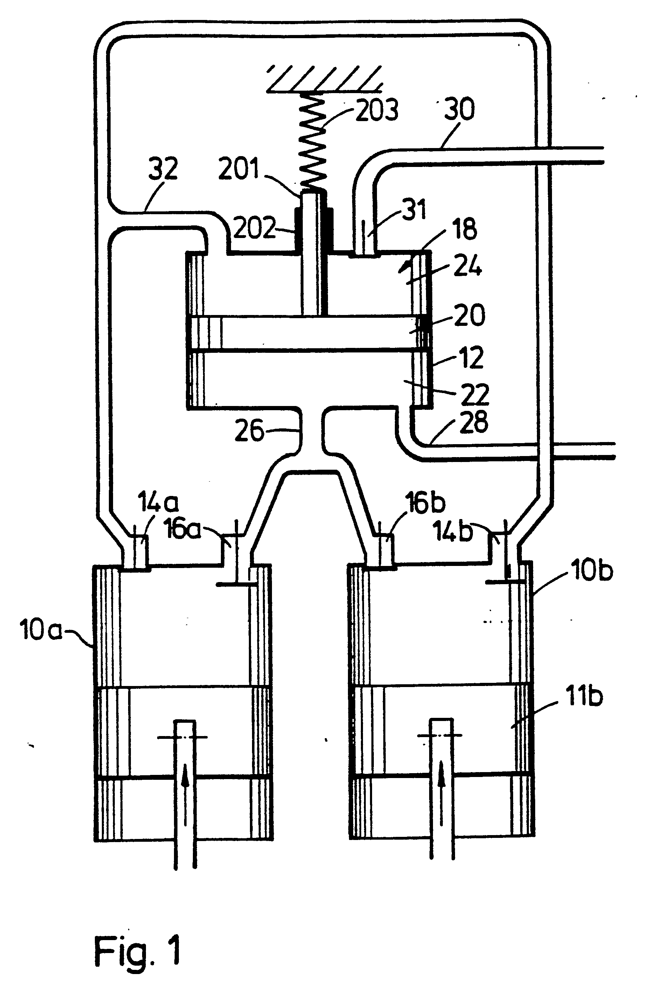

Die Fig. 1 zeigt schematisch einen Viertaktmotor, der durch zwei Zylinder 10a und 10b angedeutet ist. Diese Zylinder besitzen jeweils einen Lufteinlaß 14a bzw. 14b und einen Abgasauslaß 16a bzw. 16b. Zwischen den beiden Zylindern 10a und 10b befindet sich ein Abgaslader 12, in welchem eine Laderkammer 18 durch eine Trennwand 20 in Form eines Kolbens in eine Abgaskammer 22 und eine Ladeluftkammer 24 unterteilt wird. Die Abgaskammer ist mit einem Abgaseinlaß 26 und einem Abgasauslaß 28 versehen, wobei der Abgaseinlaß 26 mit dem Abgasauslaß 16a des Zylinders 10a und dem Abgasauslaß 16b des Zylinders 10b verbunden ist, während der Abgasauslaß 28 der Abgaskammer 22 mit dem Auspuffsystem des Motors verbunden ist. Die Ladeluftkammer 24 besitzt einen Ladelufteinlaß 30, in dem eine Rückschlagklappe 41 angeordnet ist und einen Ladeluftauslaß 32, der mit dem Lufteinlaß 14a des Zylinders 10a und dem Lufteinlaß 14b des Zylinders 10b verbunden ist.

Die Trennwand 20 wird durch die Führungsstange 201 in der Führung 202 geführt. Die Rückstellfeder 203 drückt auf die Führungsstange 201 und wirkt so dem Abgasdruck entgegen. Hierdurch wird sichergestellt, daß die Trennwand 20 sich bei Eintreffen des Abgasimpulses jeweils im unteren Totpunkt der Ladeluftkammer 24 befindet. Die Feder 203 kann so ausgelegt werden, daß die Hublänge der Trennwand 20 jeweils der Intensität des Abgasimpulses entspricht, wodurch eine Anpassung der Fördermenge der Ladeluftkammer 24 an die Belastung des Motors möglich wird.

Beispielsweise wird durch die Bewegung des Kolbens 11b im Zylinder 10b vom oberen zum unteren Totpunkt bei geöffnetem Lufteinlaß 14b Luft über den Lufteinlaß 30 des Laders 12 angesaugt. Durch entsprechend abgestimmte Anordnung wird bei der "direkten Nachladung" der Abgasimpuls aus dem Abgasauslaß 16a des Zylinders 10a zeitlich so abgestimmt, daß er die Trennwand 20 erst erreicht, wenn der Kolben 11b sich im Bereich des unteren Totpunkts beim Obergang von Ansaug- zum Verdichtungshub befindet. Der Kolben 11b saugt somit bis zu diesem Zeitpunkt Ladeluft unter Atmosphärendruck P1 über den Ladelufteinlaß 30, die Ladeluftkammer 24 und den Ladeluftauslaß 32 an. Wenn schließlich die Trennwand 20 nach oben (Fig. 1) bewegt wird, schließt die Rückschlagklappe 31 den Ladelufteinlaß 30 und der Druck im Zylinder 10b wird vom Druck P1 auf den Druck P2 angehoben, wobei sich dies während eines relativ kleinen Kurbelwinkels des Kolbens 11b abspielt, wie die Fig. 5 zeigt.

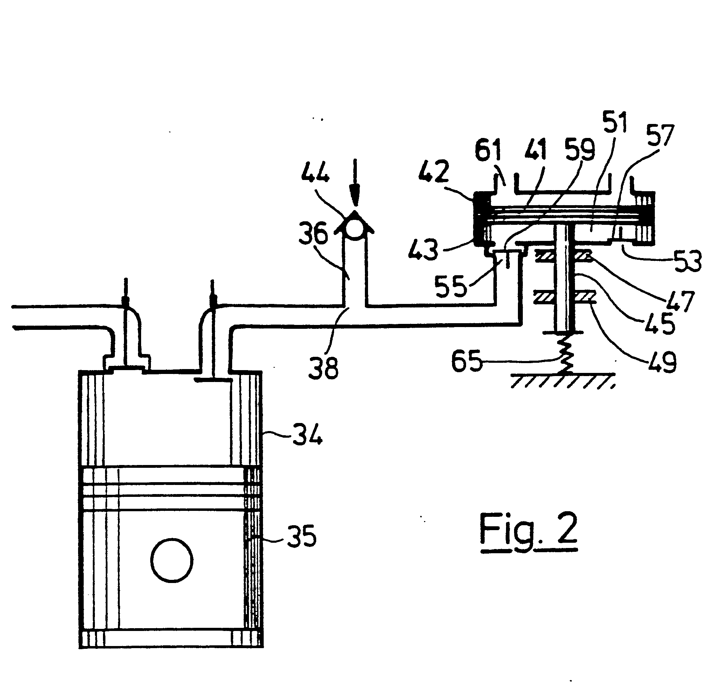

Bei der in Fig. 2 gezeigten Variante ist nur ein Motorzylinder 34 gezeigt, der dem in Fig. 1 gezeigten Zylinder 10b entspricht. Dieser Zylinder 34 enthält einen Kolben 34, der über ein Pleuel 37 mit der Motorkurbelwelle 39 verbunden ist. Bei dieser Variante ist der Abgaslader 42 über eine Verzweigung 38 an die mit einer Rückschlagklappe 33 stromauf von dieser Verzweigung 38 versehene Ansaugleitung 36 angeschlossen, so daß eine direkte Ansaugung unter Umgehung des Laders 42 möglich ist.

Der Verdrängerlader 42 ist als kurzhubiger Flachkolben-Lader ausgebildet, dessen als Trennwand dienender Kolben 41 mit einer aus dem Gehäuse 43 des Laders 42 herausgeführten Kolbenstange 45 versehen ist, die außerhalb des Gehäuses 43 in Richtung der Kolbenbewegung durch Führungen 47 und 49 geführt ist. Das Führungsspiel und die Führungslänge sind dabei so bemessen, daß sich der Kolben, abgesehen von einem gegebenenfalls vorhandenen Dichtungselement, berührungsfrei im Gehäuse 43 bewegen kann. Dadurch ergibt sich eine sehr kompakte, kostengünstige Bauweise mit hoher Leistung. Die Ladeluftkammer 51 des Laders 42 ist am Lufteinlaß 53 und am Luftauslaß 55 mit jeweils einer Rückschlagklappe 57 bis 59 versehen, wobei jedoch die Rückschlagklappe 59 am Luftauslaß 55 auch entfallen kann. Zur direkten Nachladung wird durch den Druck der über einen Abgaseinlaß 61 in eine Abgaskammer 63 des Laders 42 einströmenden Abgase der Kolben bzw. die Trennwand 41 in Fig. 2 nach unten gedrückt, wenn sich der Motorkolben 35 im Bereich seines unteren Totpunkts befindet. Nach dem Ladehub des Laders 42 wird die Trennwand 41 durch eine auf die Kolbenstange 45 einwirkende Druckfeder 65 wieder in die in Fig. 2 obere Endstellung zurückbewegt.

Bei manchen Motoren besteht aus räumlichen Gründen und/oder wegen der zeitlichen Aufeinanderfolge der Ventilbewegung keine Möglichkeit, die vorstehend erläuterte Betriebsweise direkt anzuwenden, d.h., die aus dem Auslaßventil des einen Zylinders austretende Abgasdruckwelle unmittelbar zum Einschieben der Ladeluft in einen anderen Zylinder einzusetzen. Dann ist es vorteilhaft, zwischen dem Abgasauslaß des Motorzylinders und der Laderkammer einen Abgassammler anzuordnen, wobei dann allerdings die taktweise Beaufschlagung der Laderkammer mit Abgas gesteuert werden muß, d.h., der Laderkammer werden jeweils entsprechend der gewünschten Hubzahl und dem Energiebedarf des Verdichters Abgasmengen aus dem Abgassammler zugeführt. Auch hier ist eine - direkte - zeitliche Zuordnung des Verdichterhubs einer Ladeluftkammer zum Ansaughub des entsprechenden Motorzylinders möglich.

Je nach Anforderungen kann zur Abgassteuerung die Abgasseite der Laderkammer 18 mit einem Einlaß- und oder Auslaßventil versehen sein. Die Steuerung auf der Abgasseite der Laderkammer 18 kann auch elektronisch erfolgen, wobei dem Fachmann die dafür aufzuwendenden Mittel zur elektronischen Berücksichtigung von Motor-, Lader- und anderen Betriebsdaten zur Optimierung des Laderbetriebs bekannt sind, einschließlich Klopfregelung bei Ottomotoren, und deshalb hier nicht weiter erläutert werden. Diese Optimierung kann außerdem so ausgelegt werden, daß der durch die Ladevorrichtung bewirkte Rückstau der Abgase optmiert wird. Die elektronische Regelung kann sowohl den Wirkungsgrad und das Verhalten des Antriebssystems als auch die Kosten vorteilhaft verändern.

Abhängig von der Motorbauart und insbesondere auch von der Höchstdrehzahl des Motors kann es vorteilhaft sein, einen Lader mit mehreren Zylinderpaaren eines Viertaktmotors zu verbinden. Insbesondere bei Vielzylindermotoren wird man die Abgase mehrerer Motorzylinder in einen gemeinsamen Abgassammler einleiten, der dann gleichzeitig als Druckausgleichsbehälter und Puffer dient. Dabei kann es bei großen Motoren kostengünstig sein, mehrere Laderkammern 18 aus einem Abgassammler zu versorgen. Besonders vorteilhaft ist aber, daß es auf diese Weise möglich ist, die oben beschriebene vorteilhafte Betriebsweise der direkten bzw. individuellen Nachladung der einzelnen Motorzylinder bei Motoren beliebiger Konstruktion und Zylinderzahl einzusetzen.

Für die Durchführung der direkten bzw. individuellen Nachladung der einzelnen Motorzylinder ist die Ankunft der die Ladeluft verdichtenden Abgasmasse in der Laderkammer 18 zeitlich auf die Saugbewegung des Motorkolbens 11b des zu ladenden Zylinders 10b abzustimmen. Zur Minimierung der Antriebsenergie für den Laderkolben 20 ist es dabei vorteilhaft, wenn der überwiegende Teil der Ladeluftmasse kurz vor dem Schließen des Einlaßventils 14b in den Motorzylinder 10b einströmt. Sofern dabei die Laderkammer 18 direkt durch das Auslaßventil des Zylinders 10a gesteuert mit Abgasenergie versorgt wird, muß auch der vom Abgas zwischen Auslaßventil und Laderkammer zurückzulegende Weg berücksichtigt werden.

Für das beschriebene Verfahren der "direkten Nachladung" ist die Synchronisation zwischen der Bewegung der Motorkolben und der Bewegung des Laders wichtig. Dadurch wird aber auch eine Möglichkeit eröffnet, die Mengenregelung über eine Veränderung der Phasenlage zwischen Motorbewegung und Laderbewegung durchzuführen.

Im Motorzylinder 34 (Fig. 2) wird die volle Füllmenge bei der "direkten Nachladung" dann erreicht, wenn der durch den Lader 67 bewirkte Druckanstieg auf den maximalen Ladedruck zeitlich genau mit dem Schließen des Einlaßventils 14b am Motorzylinder 34 synchronisiert ist. Verschiebt man den Zeitpunkt, zu dem der Lader seinen Förderhub beendet, gegenüber dem "optimalen" Zeitpunkt, an dem das Einlaßventil schließt, wird der maximale Druck P2 im Zylinder nicht mehr erreicht, d.h., die Füllmenge ist geringer.

Man kann dabei den Lader gegenüber der Bewegung des Motorkolbens 35 voreilen oder nacheilen lassen. Erreicht der Lader das Ende seines Förderhubs bevor das Einlaßventil 14b schließt, überlagern sich die Ansaugung durch den Motorkolben 34 und die Luftförderung durch den Lader 67 stärker und die Gesamtmenge der vom Motorzylinder 34 während des Saughubs aufgenommenen Luft verringert sich entsprechend. Erreicht der Lader das Ende seines Förderhubs erst nach dem Schließen des Einlaßventils 14b, gelangt nicht mehr das gesamte Fördervolumen des Laders in den Motorzylinder 34 und die Füllmenge ist ebenfalls geringer. Dabei wird allerdings vom Lader in der Endphase des Förderhubs eine zunächst nutzlose Arbeit geleistet. Der sich in der Ansaugleitung des Motors dadurch aufbauende Druck kann sich aber nach dem Öffnen des Einlaßventils des nachfolgend zündenden Motorzylinders als nützlich erweisen, um die Spülung dieses Motorzylinders durch Austreiben der Abgase zu bewirken.

Vorzugsweise ist der Lader 12 oder 42 mit einer Dämpfung für die Bewegung der Trennwand 21 bzw. 41 versehen, die beispielsweise hydraulisch ausgebildet sein kann.

## Patentansprüche

1. Verfahren zum Einbringen der Ladeluft in die Zylinder eines Viertakt-Mehrzylinder-Verbrennungsmotors, bei dem ein Teil der Ladeluft durch die Bewegung des Motorkolbens angesaugt wird und anschließend verdichtete Luft aus einem Verdrängerlader zugeführt wird, wobei die Ausschubbewegung des Kolbens bzw. der Kolben des Verdrängerladers mit der Kolbenbewegung der zu versorgenden Motorzylinder synchronisiert ist und wobei der durch den Motorkolben angesaugte Teil der Luft und der durch den Verdrängerlader in den Motorzylinder beförderte Teil der Luft über eine gemeinsame, das Einlaßventil des Motorzylinders enthaltende Luftleitung dem Motorzylinder zugeführt werden, dadurch gekennzeichnet, daß der Verdrängerlader durch die Motorabgase angetrieben und von ihm die Luft direkt in den zu versorgenden Motorzylinder ausgeschoben wird, wenn sich dessen Kolben im Bereich des unteren Totpunkts befindet.

2. Verfahren nach Anspruch 1, dadurch gekennzeichnet, daß der Einlaß für die Ladeluft erst geschlossen wird, wenn der Kolben den unteren Totpunkt durchlaufen hat.

3. Viertakt-Mehrzylinder-Verbrennungsmotor zur Durchführung des Verfahrens nach Anspruch 1, dessen Kolben jeweils in einem einen Lufteinlaß aufweisenden Zylinder beweglich sind, mit einem förderseitig mit dem Lufteinlaß verbundenen und mit der Kolbenbewegung des Motors synchronisierten Verdrängerlader, der anschließend an eine vom Motorkolben über diesen Einlaß angesaugte Luftmenge verdichtete Luft zuführt, dadurch gekennzeichnet, daß der Verdrängerlader ein abgasgetriebener Verdrängerlader (12, 42) ist, daß das Luftfördervolumen (24, 51) der Ladeluftkammer (18, 43) bzw. Ladeluftkammern der im zu ladenden Motorzylinder (10b, 34) zusätzlich zu der vom Motorkolben (11b, 35) angesaugten Luftmenge zu deren Verdichtung auf den Ladedruck erforderlichen Luftmenge entspricht und daß die Verbindung zwischen Verdrängerlader und Lufteinlaß derart ausgebildet ist, daß bei geöffnetem Einlaß und bei Bewegung des Laders in Förderrichtung die Luft vom Lader direkt in den Motorzylinder ausgeschoben wird und daß der Verdrängerlader derart gesteuert ist, daß seine Förderbewegung stattfindet, während der Motorkolben sich im Bereich seines unteren Totpunkts befindet.

4. Verbrennungsmotor nach Anspruch 3, dadurch gekennzeichnet, daß der Abgaseinlaß (26, 61) des Verdrängerladers (12, 42) direkt mit dem Auslaßventil (16a) des abgasliefernden Motorzylinders (10a) verbunden ist.

5. Verbrennungsmotor nach Anspruch 3, dadurch gekennzeichnet, daß dem Abgaseinlaß (26, 61) des Verdrängerladers (12, 42) ein Abgassammler vorgeschaltet und die Abgasseite (22, 63) der Laderkammer (18, 43) bzw. der Laderkammern mit einer Taktsteuerung versehen ist.

6. Verbrennungsmotor nach Anspruch 5, dadurch gekennzeichnet, daß die Phasenlage der Bewegung des Verdrängerladers (67) zum Kurbelwinkel der Motorkurbelwelle (39) einstellbar ist.

7. Verbrennungsmotor nach Anspruch 3, dadurch gekennzeichnet, daß dem Laderkolben (20, 41) eine dem Abgasimpuls entgegengesetzte Rückstellkraft zugeordnet ist.

8. Verbrennungsmotor nach Anspruch 7, dadurch gekennzeichnet, daß die Rückstellkraft derart bemessen ist, daß sich die Hublänge des Laderkolbens (20, 41) in Abhängigkeit von der Intensität der Abgasimpulse verändert.

9. Verbrennungsmotor nach einem der Ansprüche 3 bis 8, dadurch gekennzeichnet, daß der Bewegung des Laderkolbens (20, 41) eine Dämpfung zugeordnet ist.

## Claims

1. A method of introducing charging air into the cylinders of a four stroke multicylinder IC engine, in the case of which a part of the charging air is drawn in by the motion of the engine piston and subsequently compressed air is supplied from a displacement charger, the expulsion motion of the piston or, respectively, of the pistons of the displacement charger is synchronized with the piston motion of the engine cylinders to be supplied, and the part of the air, drawn in by the engine piston and the part of the air conveyed by the displacement charger into the engine cylinder are passed via a common air duct, containing the inlet valve of the engine cylinder, to the latter, characterized in that the displacement charger is driven by the exhaust gases of the engine and the air is displaced by it directly into the engine cylinder to be supplied, when the piston thereof is in the vicinity of the lower dead center position.

2. The method as claimed in claim 1, characterized in that the inlet for the charging air is only closed when the piston has passed through the lower dead center position.

3. A four stroke multicylinder IC engine for performing the method as claimed in claim 1, whose pistons are each able to move in a cylinder having an air inlet, with a displacement charger which at its outlet port is connected with the air inlet and which is synchronized with the motion of the piston of the engine, and which supplies compressed air to a quantity of air drawn in via said inlet, characterized in that the displacement charger is an exhaust gas driven displacement charger (12, 42), in that the conveyed air volume (24, 51) of the charging air chamber (18, 43) or, respectively, the charging air chambers corresponds to the amount of drawn in air in the engine cylinder (10b, 34) to be charged in addition to the amount of air necessary for the compression thereof up to the charging pressure, and in that the connection between the displacement charger and the air inlet is so designed that when the inlet is opened and during motion of the charger in the pumping direction the air is expelled directly by the charger into the engine cylinder, and in that the displacement charger is so operated that its pumpimng motion takes place while the enegine piston is in the vicinity of its lower dead center position.

4. The IC engine as claimed in claim 3, characterized in that the exhaust gas inlet (26, 61) of the displacement charger (12, 42) is connected directly with the outlet valve (16a) of the engine cylinder (10a) providing the exhaust gas.

5. The IC engine as claimed in claim 3, characterized in that an exhaust gas manifold is connected with the exhaust gas inlet (26, 61) of the displacement charger (12, 42) and in that the exhaust gas port (22, 63) of the charger chamber (18, 43) or, respectively, of the charger chambers is provided with a stroke control means.

6. The IC engine as claimed in claim 5, characterized in that the phase relationship of the motion between the displacement charger (67) and the crank angle of the engine crank shaft (39) is able to be adjusted.

7. The IC engine as claimed in claim 3, characterized by the provision of a return force, opposite to the exhaust gas pulse, for the charger piston (20, 41).

8. The IC engine as claimed in claim 7, characterized in that the return force is so dimensioned that the stroke length of the charger piston (20, 41) changes in accordance with the intensity of the exhaust gas pulses.

9. The IC engine as claimed in any one of the claims 3 through 8, characterized in that a damping means is provided for the motion of the charger piston (20, 41).

## Revendications

1. Procédé pour l'admission de l'air de charge dans les cylindres d'un moteur à combustion interne à plusieurs cylindres et à quatre temps, dans lequel une partie de l'air de charge est aspirée par le mouvement du piston du moteur et est ajoutée à de l'air comprimé provenant d'un compresseur, le mouvement de refoulement du ou des pistons du compresseur étant synchronisé avec le mouvement du piston du cylindre du moteur à alimenter, la partie de l'air aspirée par le piston du moteur et la partie d'air introduite dans le cylindre du moteur par le compres seur étant amenées cylindre du moteur par le l'intermediaire d'un conduit d'admission d'air commun contenant la soupape d'admission du cylindre du moteur, caractérisé en ce que le compresseur est entraîné par les gaz déchappement du moteur et láir est refoulé directement par ce compresseur dans le cylindre du moteur à alimenter lorsque le piston de ce cylindre se trouve dans la zone de son point mort bas.

2. Procédé suivant la revendication 1 caractérisé en ce que l'admission de l'air de charge est fermée aussitôt après que le piston a dépassé le point mort bas.

3. Moteur à combustion interne à plusieurs cylindres, à quatre temps, mettant en oeuvre le procédé suivant la revendication 1, dont les pistons sont mobiles dans un cylindre présentant un orifice d'admission d'air, comportant un compresseur dont le côté refoulement est relié à l'orifice d'admission d'air et qui est synchronisé avec le mouvement du piston du moteur, à travers cet orifice d'admission, caractérisé en ce que le compresseur est un compresseur (12, 42) du type entraîné par les gaz d'échappement, en ce que le volume de refoulement de l'air (24, 51) de la ou des chambres d'air de charge (18, 43) correspond à la quantité d'air qui doit être ajoutée à la quantité d'air aspirée par le piston (11b, 35) du moteur pour assurer sa compression à la pression de charge et en ce que la liaison entre le compresseur et l'orifice d'admission d'air est realisée de telle façon que lorsque l'orifice d'admission d'air est ouvert et que le compresseur se déplace dans la direction du refoulement, l'air provenant du compresseur est refoulé directement dans le cylindre du moteur et que le compresseur est commandé de telle façon que son mouvement de refoulement ait lieu pendant que le piston du moteur se trouve dans la zone de son point mort bas.

4. Moteur à combustion interne suivant la revendication 3 caractérisé en ce que l'orifice d'entrée des gaz d'échappement (26, 61) du compresseur (12, 42) est relié directement à la soupape d'échappement (16a) du cylindre du moteur (10a) délivrant les gaz d'échappement.

5. Moteur à combustion interne suivant la revendication 3 caractérisé en ce qu'un collecteur de gaz d'échappement est branché en amont de l'orifice d'entrée des gaz d'échappement (26, 61) dû compresseur (12, 42) et le côté (22, 63), exposé aux gaz d'échappement, de la ou des chambres du compresseur (18, 43) est pourvu d'une commande périodique.

6. Moteur à combustion interne suivant la revendication 5 caractérisé en ce que la phase du mouvement du compresseur (67) est réglable par rapport à l'angle de la position du vilebrequin (39) du moteur.

7. Moteur à combustion interne suivant la revendication 3 caractérisé en ce qu'un ressort exerçant une force de rappel opposée à l'impulsion des gaz d'échappement est associée au piston du compresseur (20, 41).

8. Moteur à combustion interne suivant la revendication 7 caractérisé en ce que la force de rappel est calibrée de façon que la longueur de la course du piston du compresseur (20, 41) puisse être modifiée en fonction de l'intensité de l'impulsion des gaz d'échappement.

9. Moteur à combustion interne suivant l'une quelconque des revendications 3 à 8 caractérisé en ce qu'un amortissement est associé au mouvement du piston du compresseur (20, 41).

Fig. 1

Fig. 2

Fig. 3

Fig. 4

Fig. 5